# EUROPEAN PATENT APPLICATION

(11) **EP 3 059 733 A2**
(43) Date of publication of application: **24.08.2016**
(21) Application number: 16155124.7
(22) Date of filing: 10.02.2016
(51) Int. Cl.: G10L 25/78, G10L 25/57, G08B 13/196, G08B 13/16

(54) **AUTOMATIC ALERTS FOR VIDEO SURVEILLANCE SYSTEMS**

(30) Priority: 18.02.2015 US 201514624680
(71) Applicant: Honeywell International Inc., Morris Plains, NJ 07950 (US)
(72) Inventor: PALANISAMY, Prabhu, Morris Plains, NJ New Jersey 07950 (US); INGLE, Vilas, Morris Plains, NJ New Jersey 07950 (US); MUKTEVI, Srinivas, Morris Plains, NJ New Jersey 07950 (US); MAHASENAN, Arun V., Morris Plains, NJ New Jersey 07950 (US)
(74) Representative: Houghton, Mark Phillip

(57) **Abstract**

A method includes receiving sound from an area being monitored by a video surveillance system having a camera and microphone, analyzing the sound to determine a classification of the sound, and capturing video of the area being monitored responsive to the classification of the sound.

## Description

### Background

Video surveillance systems capture video and perform video analytics to create alerts to notify operators and users about abnormal activities. Some systems also alert if anynoise levels reach a certain threshold. These types of systems enable an operator to monitor many more cameras than prior systems, as they draw an operator's attention to abnormal activities that might not otherwise be noticed by the operator trying to pay attention to a large number of video images from a large number of cameras.

### Summary

A method includes receivingsoundfrom an area being monitored by a video surveillance system having a camera and microphone, analyzing the sound to determine a classification of the sound, and capturing video of the area being monitored responsive to the classification of the sound.

A machine readable storage device has instructions for execution by a processor of the machine to perform actions include receiving sound from an area being monitored by a video surveillance system having a camera and microphone, analyzing the sound to determine a classification of the sound, and capturing video of the area being monitored responsive to the classification of the sound.

A device includes a processor, a camera coupled to the processor, a microphone coupled to the processor,and a memory device coupled to the processor and having a program stored thereon for execution by the processor to receive sound from an area being monitored by the camera, analyze the sound to determine a classification of the sound, and capture camera provided images of the area being monitored responsive to the classification of the sound.

### Brief Description of the Drawings

FIG. 1 is a block diagram of an audio enhanced video surveillance system according to an example embodiment.
FIG. 2 is a flowchart illustrating a method of classifying sounds and controlling a video surveillance system according to an example embodiment.
FIG. 3 is a block diagram of electronic circuitry for performing methods according to example embodiments.

### Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

The functions or algorithms described herein may be implemented in software or a combination of software and human implemented procedures in one embodiment. The software may consist of computer executable instructions stored on computer readable media or computer readable storage device such as one or more memory or other type of hardware based storage devices, either local or networked. Further, such functions correspond to modules, which are software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system.

A camera based video surveillance system combines video analytics with audio and voice features such as voice related features, to enhance surveillance capabilities. In various embodiments, sound is detected and classified. Example classifications include gunshot, baby crying, barking, screaming, car and vehicle sounds, glass breaking, electric switch sounds, and more, voice detection, voice recognition, and aggressive sentiment analysis among other sounds. The classification, along with a detected direction of the sound may be used to control camera functions with audio and sound sourcing techniques , such as moving the camera to capture video in the direction of the sound, panning, and zooming automatically. And finally identifying the images using video analytics to detect abnormal activity such as a person walking, running, falling down, unidentified flying things, etc.

Alerts may be generated to notify an operator/user of activity detected in the video surveillance system, which may comprise one or a fewhundreds of cameras. The alerts ensure the operator pays attention to the images and sound from cameras that may be most relevant.

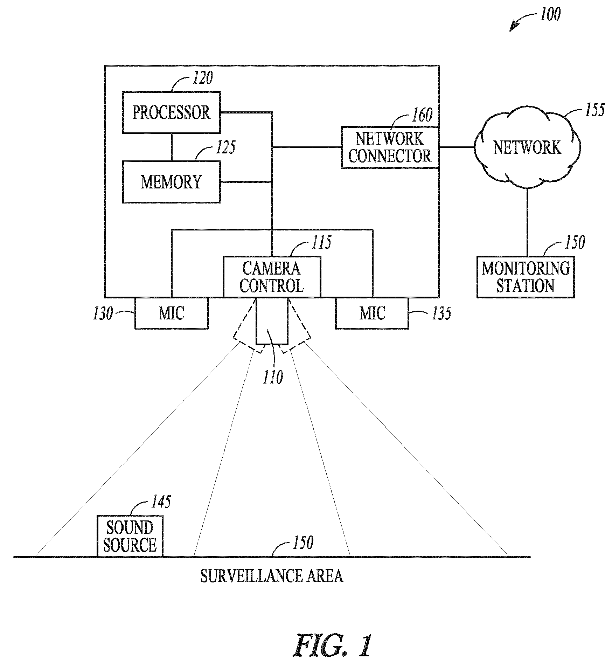

FIG. 1 is a block diagram of a video surveillance system 100. System 100 includes a camera 110, camera control 115 to receive signals from a processor 120 or other source and move the camera in accordance with the signals. The processor includes a memory 125 that contains programming to cause the processor to perform various methods to process video received from the camera and perform video analytics to detect events of interest, such as people walking by the camera, cars driving past the camera, and high order events, such as people arguing or fighting. Such video analytics are current available in many video surveillance systems.

In one embodiment, one or more microphones 130, 135 are included and coupled to provide audio signals representative of detected sound to the processor 120. The signals may be digitized prior to or at the processor to facilitate digital processing of the sound. The sound corresponds to an area 140 being monitored within and possibly outside a field of view of the camera 110 of system 100. The processor 120 analyzes the sound to determine a classification of the sound. When a sound is classified, the camera may be used to capture video of the area being monitored responsive to the classification of the sound. In one embodiment, 360 degree direction of the sound is determined. Microphones 130, 135 may be separated in distance to determine a direction of the sound, such as from a sound source 145. One or more of the microphones may include directional microphones operating on time of flight principles to provide both horizontal and optionally vertical direction signals. The processor then uses the camera control 115 to move the camera to point in the direction of the sound, such as toward sound source 145 and capture video or a sequence of images.

The video may be provided to a monitoring station 150 via a network 155 using a network connector 160 coupled to the processor 120. In one embodiment, determining a classification of the sound includes determining that the received sound includes a voice, a human screaming, baby crying, a gunshot, or includes a sound emanating from an automobile.

In further embodiments, determining a classification of the sound includes performing speech recognition on the sound and detecting a keyword from a list of keywords. Such key words may include the words such as "help", "save", "oh my god", "oops"or "gun" in one or more languages, and other words that are appropriate for the context of the area being monitored. For instance, a bank may have different key words that are associated with an event that should be monitored more closely, than government offices, military bases, hospitals, automated teller machines, homes, business offices, daycares, educational institutions, banking, private safety areas, etc. Each context may have a different set of words, which may also overlap.In still further embodiments, determining a classification of the sound further includes performing a sentiment analysis to identify emotional sentiment of the speech such as a smile, crying, aggression, anger, sad, laugh, etc.

When speech has been recognized, a transcript of the recognized speech may be generated and displayed on a display device with the corresponding video, such as at monitoring station. An alert may be generated to alert a user/ operator. In some embodiments, the processor 120 performsa sentiment analysis on the sound to determine an emotional identification, such as anger, laughter, or other emotions.

An alert may be generated based on the classification of the sound and sent to the monitoring station 150, such as a mobile phone, work station, laptop, or other device which may be viewed by an operator or other live person, or simply recorded for future viewing or data mining.

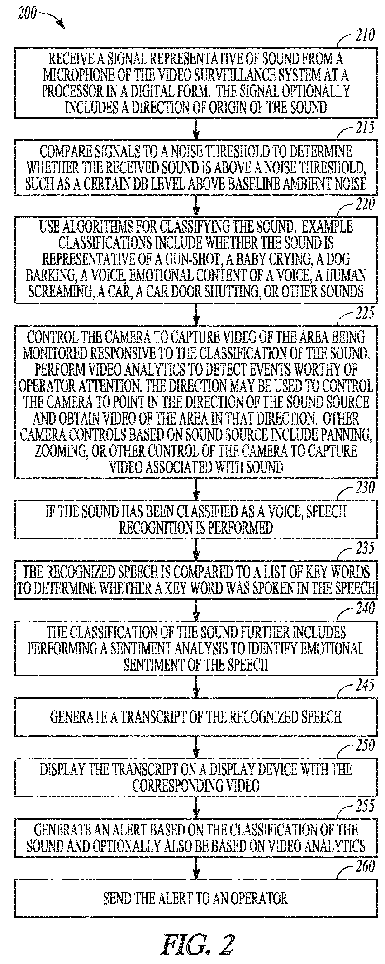

FIG. 2 is a flowchart illustrating a method 200 of classifying sound in a video surveillance system. At 210, a signal representative of sound received from a microphone of the video surveillance system is provided to a processor in a digital form. At 215, the signals may be compared to a noise threshold to determine whether the received sound is above a noise threshold, such as a certain dB level above baseline ambient noise. In some embodiments, the threshold may be zero, and all sound is passed to the processor for analysis.

At 220, the processor uses one or more known algorithms for classifying the sound. The classification may involve determining whether the sound is representative of a gun-shot, a baby crying, a dog barking, a voice, emotional content of a voice, a human screaming, a car, a car door shutting, or other sounds. Some such algorithms use pattern matching to compare the received sound against a library of sounds. Further algorithms may perform a spectral analysis and look for similar spectrums associated with different classifications of the sound. Such algorithms may initially perform a feature extraction by characterizing a short-time spectrum of the sound, retaining coarse spectral energy distributions, and using trained models to identify and classify sounds. Many other types of features may be utilized in various embodiments.

At 225, the camera may be controlled to capture video of the area being monitored responsive to the classification of the sound. Some classifications of sound may be ignored in some embodiments depending on the context of the area being monitored. For example, in a room full of people talking, the classification of sound as a voice may be ignored, unless the classification includes a sentiment assessment indicating anger or aggression. However, in a closed museum after hours, the detection of a voice may be an event that triggers video capture. In further embodiments, the video is being captured continuously, but the resolution of the video may be enhanced for some classifications of sound to capture better quality images of the area. Also at 225, as the video is captured, video analytics may be performed on the video to detect events worthy of operator attention. Such video analytics may be performed using many different known methods of analyzing video for activity of interest. The video analytics may also utilize the classification of the sound to augment the video analytics. For instance if an image is thought to be a person with a degree of probability, the additional information that the sound was a voice may be used to increase such probability, enhancing the video analytics.

In one embodiment, the sound provided to the processor includes a direction, which may be detected by a directional microphone using time of flight in one embodiment. The direction may be used to control the camera to point in the direction of the sound source and obtain video of the area in that direction. Other camera controls based on sound source include panning, zooming, or other control of the camera to capture video associated with sound. For example, if sound is coming from multiple sources over a wide angle, the camera may zoom out to provide a wider view. If a single source of sound is detected, the camera may zoom in to provide a closer view of the source.

If the sound has been classified as a voice, speech recognition may be performed at 230. At 235, the recognized speech is compared to a list of key words to determine whether a key word was spoken in the speech. At 240, the classification of the sound further includes performing a sentiment analysis to identify emotional sentiment of the speech. Sentiment analysis is also well known and may be done using one or more of many different analysis mechanisms. At 245, a transcript of the recognized speech may be generated and at 250, the transcript may be displayed on a display device with the corresponding video.

At 255, an alert may be generated based on the classification of the sound and may also be based on video analytics. At 260, an alert may be sent to an operator. The operator may be a person, and the alert may be in the form of a text message, audio messages, email, or other electronic communication designed to draw the attention of a user/operator to an event detected by the video surveillance system. In some embodiments, alerts may be sent via SMS (short message service), audio alert, audio messages, text messages, triggering/siren sound and through mobile apps to any wearable devices. In some embodiments, the alert may specify the classification of the audio and provide a link, such as a hyperlink to the video in the event the video is not otherwise being viewed. The link may point to a recording of the video at the corresponding time the sound was classified, or may simply allow an operator to view a current video feed. In further embodiments, the alert may include an attached video corresponding to the time the sound was detected or classified and perhaps a short time before and after the sound. Otherwise, the operator may be provided with typical video reviewing capabilities such as rewind, play, fast forward, current, etc.

Control of the camera may be done at any part of method 200 in some embodiments, and may also depend on the classification of the sound. If a gun-shot is detected, the camera may zoom out to include both the shooter and a victim. The victim may or may not have made a sound such as a scream, or may use the keyword "shot" as in "I've been shot." Panning right and left, or up and down, and zoom in and zoom out may be done dependent on the classification and direction of multiple sounds over a wide area. Thus, many different camera controls may be implemented dependent on the sound classification and even the context of the area being monitored.

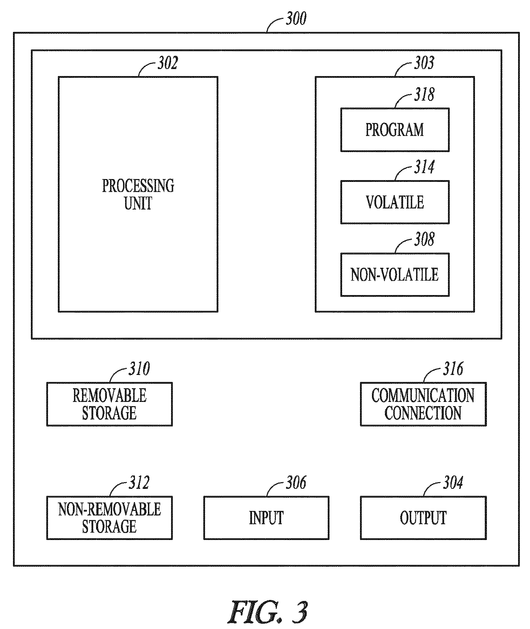

FIG. 3 is a block schematic diagram of a computer system 300 to implement methods according to example embodiments. All components need not be used in various embodiments.One example computing device in the form of a computer 300, may include a processing unit 302, memory 303, removable storage 310, and non-removable storage 312. Although the example computing device is illustrated and described as computer 300, the computing device may be in different forms in different embodiments. For example, the computing device may instead be a smartphone, a tablet, smartwatch, or other computing device including the same or similar elements as illustrated and described with regard to FIG. 3. Devices such as smartphones, tablets, and smartwatches are generally collectively referred to as mobile devices. Further, although the various data storage elements are illustrated as part of the computer 300, the storage may also or alternatively include cloud-based storage accessible via a network, such as the Internet.

Memory 303 may include volatile memory 314 and non-volatile memory 308. Computer 300 may include - or have access to a computing environment that includes - a variety of computer-readable media, such as volatile memory 314 and non-volatile memory 308, removable storage 310 and non-removable storage 312. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions.

Computer 300 may include or have access to a computing environment that includes input 306, output 304, and a communication connection 316. Output 304 may include a display device, such as a touchscreen, that also may serve as an input device. The input 306 may include one or more of a touchscreen, touchpad, mouse, keyboard, camera, one or more device-specific buttons, one or more sensors integrated within or coupled via wired or wireless data connections to the computer 300, and other input devices. The computer may operate in a networked environment using a communication connection to connect to one or more remote computers, such as database servers. The remote computer may include a personal computer (PC), server, router, network PC, a peer device or other common network node, or the like. The communication connection may include a Local Area Network (LAN), a Wide Area Network (WAN), cellular, WiFi, Bluetooth, or other networks.

Computer-readable instructions stored on a computer-readable medium are executable by the processing unit 302 of the computer 300. A hard drive, CD-ROM, and RAM are some examples of articles including a non-transitory computer-readable medium such as a storage device. The terms computer-readable medium and storage device do not include carrier waves. For example, a computer program 318 capable of providing a generic technique to perform access control check for data access and/or for doing an operation on one of the servers in a component object model (COM) based system may be included on a CD-ROM and loaded from the CD-ROM to a hard drive. The computer-readable instructions allow computer 300 to provide generic access controls in a COM based computer network system having multiple users and servers.

### Examples

1. A method comprising:
   receiving sound from an area being monitored by a video surveillance system having a camera and microphone;
   analyzing the sound to determine a classification of the sound; and
   capturing video of the area being monitored responsive to the classification of the sound.
2. The method of example 1 and further comprising:
   determining a direction of the sound;
   causing the camera of the video surveillance system to move to point in the determined direction of the sound based on the classification of the sound; and
   capturing video of the area being monitored in the determined direction of the classified sound.
3. The method of any of examples 1-2 wherein determining a classification of the sound comprises determining the received sound includes a human voice.
4. The method of any of examples 1-3 wherein determining a classification of the sound comprises determining the received sound includes at least one of a gunshot, baby crying, barking, screaming, a human voice, and an aggressive sentiment in a human voice.
5. The method of any of examples 1-4 wherein determining a classification of the sound comprises determining the received sound includes a sound emanating from an automobile.
6. The method of any of examples 1-5 wherein determining a classification of the sound comprises:
   performing speech recognition on the sound; and
   detecting a keyword from a list of keywords.
7. The method of example 6 wherein determining a classification of the sound further comprises performing a sentiment analysis to identify emotional sentiment of the speech.
8. The method of any of examples6-7 and further comprising:
   generating a transcript of the recognized speech; and
   displaying the transcript on a display device with the corresponding video.
9. The method of any of examples 1-8 wherein determining a classification of the sound comprises determining the received sound includes a human scream.
10. The method of any of examples 1-9 wherein analyzing the sound to determine a classification of the sound comprises using audio sourcing techniques wherein the microphone comprises an array of microphones.
11. The method of any of examples 1-10 and further comprising:
   generating an alert based on the classification of the sound; and
   sending the alert to an operator.
12. The method of any of examples 1-11 wherein determining a classification of the sound comprises performing a sentiment analysis on the sound to determine an emotional identification from a group of sentiment including crying, aggression, anger, sadness, and laughter.
13. A machine readable storage device having instructions for execution by a processor of the machine to perform actions comprising:
   receiving sound from an area being monitored by a video surveillance system having a camera and microphone;
   analyzing the sound to determine a classification of the sound; and
   capturing video of the area being monitored responsive to the classification of the sound.
14. The machine readable storage device of example 13 wherein the actions further comprise:
   determining a direction of the sound;
   causing the camera of the video surveillance system to move to point in the determined direction of the sound based on the classification of the sound; and
   capturing video of the area being monitored in the determined direction of the classified sound.
15. The machine readable storage device of any of examples 13-14 wherein determining a classification of the sound comprises determining the received sound includes a voice, a gunshot, or a sound emanating from an automobile.
16. The machine readable storage device of any of examples 13-15 wherein determining a classification of the sound comprises:
   performing speech recognition on the sound; and
   detecting a keyword from a list of keywords.
17. The machine readable storage device of any of examples 13-16 wherein the actions further comprise:
   generating an alert based on the classification of the sound, the alert including an identification of the classification of the sound; and
   sending the alert to an operator.
18. A device comprising:
   a processor;
   acamera coupled to the processor;
   a microphone coupled to the processor; and
   a memory device coupled to the processor and having a program stored thereon for execution by the processor to:
      receive sound from an area being monitored by the camera via the microphone;
      analyze the sound to determine a classification of the sound; and
      capture camera provided images of the area being monitored responsive to the classification of the sound.
   19. The device of example 18 wherein execution by the processor further comprises:
      determining a direction of the sound;
      causing the camera to move to point in the determined direction of the sound based on the classification of the sound; and
      capturing video of the area being monitored in the determined direction of the classified sound.
   20. The device of any of examples 18-19 wherein determining a classification of the sound comprises:
      performing speech recognition on the sound; and
      detecting a keyword from a list of keywords.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

## Claims

1. A method (200) comprising:
receiving (210) sound (145) from an area (150) being monitored by a video surveillance system (100) having a camera (110) and microphone (130, 135);
analyzing the sound (220) to determine a classification of the sound (145); and
capturing video (225) of the area (150) being monitored responsive to the classification of the sound (145).

2. The method of claim 1 and further comprising:
determining (225) a direction of the sound (145);
causing (225) the camera (110) of the video surveillance system to move to point in the determined direction of the sound (145) based on the classification of the sound; and
capturing (225) video of the area being monitored in the determined direction of the classified sound (145).

3. The method of claim 1 wherein determining a classification of the sound (145) comprises determining (220) the received sound includes a human voice and other unclassified noises.

4. The method of claim 1 wherein determining a classification of the sound (145) comprises:
performing speech recognition (230) on the sound (145); and
detecting a keyword (235) from a list of keywords.

5. The method of claim 4 wherein determining a classification of the sound (145) further comprises performing a sentiment analysis (240) to identify emotional sentiment of the speech.

6. The method of claim 4 and further comprising:
generating a transcript (245) of the recognized speech; and
displaying the transcript (250) on a display device with the corresponding video.

7. The method of claim 1 wherein analyzing the sound (145) to determine a classification of the sound (145) comprises using audio sourcing techniques wherein the microphone (130, 135) comprises an array of microphones (130, 135).

8. The method of claim 1 and further comprising:
generating an alert (255) based on the classification of the sound (145); and
sending the alert (260) to an operator.

9. A machine readable storage device having instructions for execution by a processor of the machine to perform actions comprising:
receiving (210) sound (145) from an area (150) being monitored by a video surveillance system (100) having a camera (110) and microphone (130, 135);
analyzing the sound (220) to determine a classification of the sound (145); and
capturing video (225) of the area (150) being monitored responsive to the classification of the sound (145).

10. The machine readable storage device of claim 9wherein the actions further comprise:
determining (225) a direction of the sound (145);
causing (225) the camera (110) of the video surveillance system to move to point in the determined direction of the sound (145) based on the classification of the sound; and
capturing (225) video of the area being monitored in the determined direction of the classified sound (145).

11. The machine readable storage device of claim 9 wherein determining a classification of the sound (145) comprises determining (220) the received sound includes a voice, a gunshot, or a sound emanating from an automobile and other ambient noise.

12. The machine readable storage device of claim 9 wherein determining a classification of the sound (145) comprises:
performing speech recognition (230) on the sound (145); and
detecting a keyword (235) from a list of keywords.

13. The machine readable storage device of claim 9 wherein the actions further comprise:
generating an alert (255) based on the classification of the sound (145), the alert including an identification of the classification of the sound (145); and
sending the alert (260) to an operator.

14. A device comprising:
a processor;
a camera (110) coupled to the processor;
a microphone (130, 135) coupled to the processor; and
a memory device coupled to the processor and having a program stored thereon for execution by the processor to:
receive (210) sound (145) from an area (150) being monitored by thecamera (110) via the microphone (130, 135);
analyze (220) the sound (145) to determine a classification of the sound; and
capturecamera (110) providedimages (225) of the area being monitored responsive to the classification of the sound (145).

15. The device of claim 14wherein execution by the processor further comprises:
determining (225) a direction of the sound (145);
causing (225) the camera (110)to move to point in the determined direction of the sound (145) based on the classification of the sound;
capturing (2225) video of the area (150) being monitored in the determined direction of the classified sound (145); and
wherein determining a classification of the sound (145) comprises:
performing speech recognition (230) on the sound (145); and
detecting a keyword (235) from a list of keywords.
